# EUROPÄISCHE PATENTANMELDUNG

(11) **EP 0 906 818 A2**
(43) Veröffentlichungstag der Anmeldung: **07.04.1999**
(21) Anmeldenummer: 98116520.2
(22) Anmeldetag: 01.09.1998
(51) Int. Cl.: B29C 33/72, B29C 53/82

(54) **Flexibles Dichtsystem**

(30) Priorität: 20.09.1997 DE 19741615
(71) Anmelder: DaimlerChrysler AG, 70567 Stuttgart (DE)
(72) Erfinder: Vullriede, Siegfried, 81677 München (DE); Kretschmar, Martin, 87616 Marktoberdorf (DE)

(57) **Zusammenfassung**

Das flexible Dichtsystem, insbesondere für Wachshohlkerne, besteht aus einem metallischem Aussendeckel, einem Dichtring, einem in die abzudichtende Öffnung einsetzbaren, konisch zulaufenden im wesentlichen kreisförmigen metallischen Kern, der von einem elastisch verformbaren Dichtkörper umgeben wird, welcher zwei im Abstand voneinander angeordnete Außenwände aufweist, die einen ringförmigen geschlossenen Raum bilden, in den ein metallisches verformbares Gliederband eingelegt wird. Es sind getrennte Druckluftkanäle vorgesehen, um sowohl den Wachshohlkern mit einem Innendruck zu beaufschlagen als auch um den Dichtkörper aufzublasen.

## Beschreibung

Die vorliegende Erfindung betrifft ein flexibles Dichtsystem für mit einer kreisförmigen Öffnung versehene Hohlkörper, insbesondere Wachshohlkerne.

Hohlkerne und insbesondere Wachshohlkerne werden oftmals bei der Herstellung von Hohlprofil-Bauteilen, z. B. aus Faserverbundkunststoffen eingesetzt, bei dem ein mit Kunststoff getränktes Faserhalbzeug auf einem durch Druck expandierbaren Wachshohlkern mit einem dem Hohlprofil-Bauteil entsprechenden Querschnitt durch Druckbeaufschlagung des Hohlkerns in einer Aussenform zu dem Hohlprofil-Bauteil verpresst und der Hohlkern aus dem Hohlprofil-Bauteil entfernt wird. So beschreibt die DE 39 23 416 ein derartiges Verfahren, wobei ein Hohlkern verwendet wird, der hermetisch abgeschlossen ist und entweder einen konstanten Querschnitt aufweist oder sich verjüngt; zum Expandieren wird die Hohlform auf eine hohe Temperatur erwärmt, so dass eine plastische Verformung auftritt. Nach dem Abkühlen des Hohlkerns und des Hohlprofil-Bauteils wird der Hohlkern entfernt.

Bei der Herstellung von Heckspoilern für Kraftfahrzeuge werden oftmals Wachskerne verwendet, die mit Glasfasermatten belegt werden, welche mit duromeren Kunststoffen getränkt sind, um anschliessend in einer Presse verpresst zu werden. Hierbei werden vorzugsweise flächige Hohlprofil-Bauteile aus Faserverbundkunststoffen hergestellt, da nur die zur Pressrichtung senkrechten Flächenabschnitte der Glasfasermatte verpresst werden, Flächenabschnitte, die in Pressrichtung verlaufen, aber praktisch nicht.

In der deutschen Patentanmeldung P 197 09 104 (= em 11988) wurde bereits ein Verfahren zur Herstellung von Hohlprofil-Bauteilen aus Faserverbundkunststoffen vorgeschlagen, bei dem ein duromerer Kunststoff verwendet wird, der beim Verpressen aushärtet, unter Verwendung eines Wachshohlkerns, der zur Entfernung aus dem Hohlprofil-Bauteil herausgeschmolzen wird.

Mit diesem bekannten Verfahren lassen sich Hohlprofil-Bauteile aus Faserverbundkunststoffen für hochbelastete Strukturbauteile herstellen, insbesondere für hochbelastbare Strukturbauteile mit veränderlichem Querschnitt. Das mit dem duromeren Kunststoff getränkte Faserhalbzeug wird dabei auf einem Wachshohlkern in einem Formwerkzeug angeordnet, welches die Aussenform bildet. Der Wachshohlkern wird innen mit einem flüssigem oder gasförmigen Medium unter Druck gesetzt, wodurch er expandiert und damit das Faserhalbzeug komprimiert. Unter dem Druck des Wachshohlkerns und vorzugsweise unter Erwärmung erfolgt danach die Aushärtung des duromeren Kunststoffes, wonach der Wachshohlkern entfernt wird.

Um nun einen derartigen Wachshohlkern innen mit Druck und insbesondere mit Druckluft zu beaufschlagen, muss die Zugangsöffnung zum Wachshohlkern, die üblicherweise kreisförmig ausgestaltet ist, durch ein Dichtsystem geschlossen werden, welches zum einen eine zuverlässige Abdichtung der Öffnung gewährleistet und zum anderen die Zufuhr von Druckluft zum Inneren des Wachshohlkerns ermöglicht.

Aufgabe der vorliegenden Erfindung ist es, ein derartiges Dichtsystem für einen mit einer kreisförmigen Öffnung versehenen Hohlkörper, insbesondere einen Wachshohlkörper, zu schaffen, welcher sich aufgrund seiner flexiblen Ausgestaltung optimal an die sich verändernde Kontur der Öffnung anpasst, das einfach im Aufbau ist und den empfindlichen Wachshohlkern bei dessen Expansion nicht beschädigt.

Die Lösung dieser Aufgabe erfolgt mit dem im kennzeichnenden Teil des Anspruchs 1 angegebenen Merkmalen; eine vorteilhafte Weiterbildung ist im Unteranspruch beschrieben.

Das erfindungsgemässe flexible Dichtsystem bietet den Vorteil einer flexiblen Abdichtung bei allen auftretenden Innendrucken im Wachshohlkern, da es dessen Expansion mitmacht, ohne dass zusätzliche Kräfte auf die Innenwand der Öffnung des Wachshohlkerns ausgeübt werden, wobei es höheren Drucken bis ca. 8 bar standhält und Durchmesserschwankungen des Wachshohlkerns im Bereich dessen Öffnung ausgleicht; auch nicht ausgedrehte Wachshohlkerne, d. h. solche mit einer geringfügig rauhen Oberflächenstruktur an der Innenwand der Öffnung, werden zuverlässig abgedichtet.

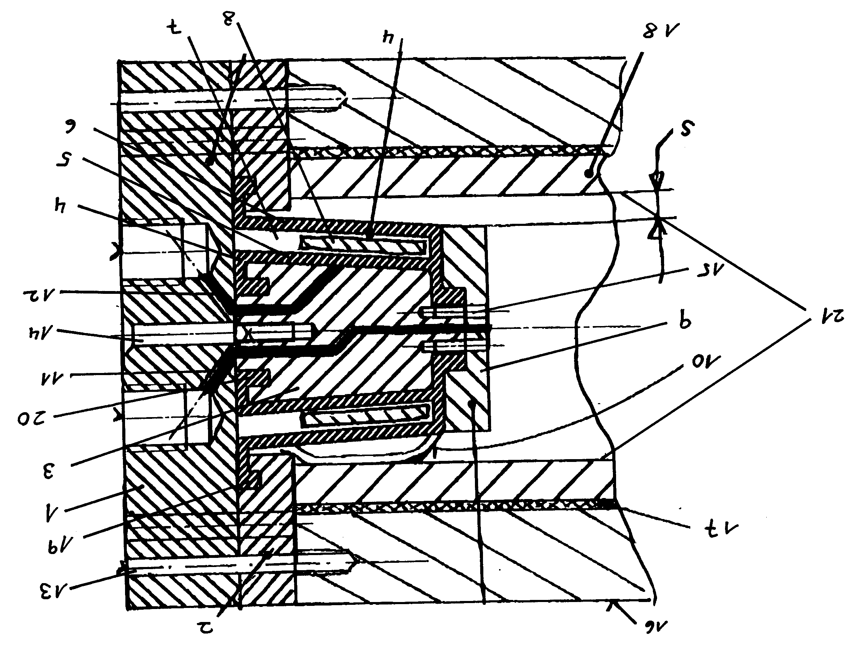

Im folgenden wird die Erfindung anhand der Zeichnung näher erläutert, in der ein vorteilhaftes Ausführungsbeispiel schematisch im Schnitt dargestellt ist.

In der einzigen Figur ist mit 18 ein Wachshohlkern bezeichnet, dessen kreisförmige Öffnung 21 abgedichtet werden soll.

Zu diesem Zweck besitzt das flexible Dichtsystem einen metallischen Aussendeckel 1, dessen Durchmesser grösser als derjenige der abzudichtenden Öffnung 21 ist und der vorzugsweise kreisförmig ausgestaltet ist. An den Aussendeckel 1 schliesst sich ein ebenfalls metallischer Dichtring 2 an, dessen Aussenrand mit dem Aussenrand des Aussendeckels 1 fluchtet. Der Dichtring 2 ist beispielsweise mit dem Aussendeckel 1 über eine Verschraubung 13 verbunden.

Mit 3 ist ein in die abzudichtende Öffnung 21 einsetzbarer leicht konisch zulaufender kreisförmiger metallischer Kern bezeichnet, der mit dem Aussendeckel 1 vorzugsweise über eine Verschraubung 14 fest verbunden ist.

Der Kern 3 wird von einem elastisch verformbaren Dichtkörper 4, vorzugsweise aus einer geeigneten Silikonmasse, umgeben, der zwei im Abstand voneinander angeordnete, einen ringförmigen geschlossenen Raum 7 bildende Aussenwände 5, 6 aufweist und der mit Spiel derart in die abzudichtende Öffnung 21 eingreift, das im nicht beaufschlagtem Zustand des Dichtkörpers 4 ein Spalt s von ca. 1 mm zwischen dem vorderen Ende des Dichtkörpers 4 und der Innenwand der Öffnung 21 besteht.

In den ringförmigen Raum 7 ist nun ein metallisches verformbares Gliederband 8 eingesetzt, z. B. in Form eines metallischen Uhrarmbandes, wobei die Einzelteile durch eine elastische Verbindung miteinander derart verbunden sind, dass der Durchmesser des Gliederbandes 8 variabel ist.

Stirnseitig an den Kern 3 liegt ein mit ihm z. B. über eine Verschraubung 15 verbundener Innendeckel 9 an, der auch den stirnseitigen Anteil des Dichtkörpers 4 zumindest teilweise einklemmt.

Mit 9 ist ein erster Druckluftkanal bezeichnet, der sowohl den Aussendeckel 1 als auch den Kern 3 und den Innendeckel 9 dergestalt durchsetzt, dass er in dem verbleibenden nicht abgedichteten Teil der Öffnung 21 des Wachshohlkörpers 18 mündet, so dass dieser mit einem Innendruck beaufschlagt werden kann, um ihn so an das ihn umgebende schlauchförmige mit Harz getränkte Geflecht 17 anzuschmiegen und dieses gegen ein Werkzeug 16 zu pressen.

Mit 12 ist ein zweiter Druckluftkanal bezeichnet, der den Aussendeckel 1 und den Kern 2 durchsetzt und der an der Aussenseite des Kerns 2 derart mündet, dass der den Kern 3 umgebende Dichtkörper 4 aufgeblasen wird. Wird nun Druckluft durch den Druckluftkanal 12 eingeblasen, so wölben sich die beiden Aussenwände 5, 6 des Dichtkörpers 4 und spreizen gleichzeitig das in den ringförmigen Raum 7 eingelegte metallische Gliederband 8, so dass eine gleichmässige Anlegefläche der äusseren Aussenwand 6 an den zugehörigen Teil der Innenwand der Öffnung 21 erfolgt, wie es schematisch mit 10 bezeichnet ist.

Mit 19, 20 sind diejenigen Enden der Aussenwände 5, 6 des Dichtkörpers 4 bezeichnet, die zwischen dem Dichtring 2 und dem Aussendeckel 1 eingeklemmt sind.

Das dargestellte Dichtsystem weist den Vorteil auf, dass die Wachshohlkerne nicht mehr auf der Drehbank massgenau ausgedreht werden müssen und dass unterschiedliche Innendurchmesser und damit verschiedene Wandstärken des Wachshohlkerns abgedichtet werden können. Das Dichtsystem macht die elastische Verformung des Wachshohlkernes mit und dichtet dessen Öffnung zuverlässig ab. Die Einstellwerte sind jederzeit wieder reproduzierbar, wobei das erfindungsgemässe Dichtsystem wieder verwendbar, robust und zuverlässig. ist.

Bei einer Konizität des Kerns und des Dichtkörpers von ca. 5° treten keinerlei Abdichtprobleme auf; durch das Einlegen eines metallischen verformbaren Gliederbandes in den durch die beiden Aussenwände des Dichtkörpers gebildeten ringförmigen Raum wird eine flächige Auflage der äusseren Aussenwand 6 des Dichtkörpers 4 an die Innenwand der Öffnung 18 gewährleistet. Wird zusätzlich eine Kühlmöglichkeit für das Dichtsystem verwendet, beispielsweise in Form einer Kühlschlange, die das Dichtsystem umgibt und z. B. durch eine Pumpe mit Wasser gekühlt wird, so ist es möglich, eine höhere Wachsfestigkeit zu erzielen, d. h. dass der Wachshohlkern höher erwärmt werden kann und gleichzeitig Risse vermieden werden.

Damit ist es möglich, den Wachshohlkern mit höheren Innendrücken, z.B. bis über 5bar, zu beaufschlagen ohne ihn zu beschädigen bei einer gleichzeitigen Steigerung der Aushärtetemperatur bis in den besonders elastischen Bereich des Wachskerns.

Für den Dichtkörper 4 wird vorzugsweise ein handelsübliches Silikon verwendet in Form einer unvernetzten Silikongrundmasse, die mit einem Härter, beispielsweise einem Platin-Katalysator, der die Polymerisation initiiert, vermischt wird. Gegebenenfalls kann noch ein Stabilisator zur Erhöhung der Viskosität des Silikons beigemischt werden.

## Patentansprüche

1. Flexibles Dichtsystem für einen mit einer kreisförmigen Öffnung versehenen Hohlkörper, insbesondere einen Wachshohlkörper, gekennzeichnet durch die folgende Kombination:
a) ein Aussendeckel (1), dessen Durchmesser grösser als derjenige der abzudichtenden Öffnung (21) ist;
b) ein an der der abzudichtenden Öffnung (21) zugewandten Seite des Aussendeckels (1) anliegender Dichtring (2);
c) ein in die abzudichtende Öffnung einsetzbarer konisch zulaufender kreisförmiger Kern (3), der mit dem Aussendeckel (1) verbunden ist;
d) ein den Kern (3) umgebender elastisch verformbarer Dichtkörper (4), der zwei im Abstand voneinander angeordnete, einen ringförmigen geschlossenen Raum (7) bildende Aussenwände (5, 6) aufweist;
e) ein in den durch die beiden Aussenwände (5, 6) des Dichtkörpers (4) gebildeten ringförmigen Raum (7) eingesetztes verformbares Gliederband (8);
f) ein stirnseitig am Kern (3) anliegender mit ihm verbundener, einen Teil des Dichtkörpers (4) überdeckenden Innendeckel (9);
g) ein den Aussendeckel (1), den Kern (3) und den Innendeckel (9) durchsetzender Fluidkanal (11), der in der Öffnung (21) des Wachshohlkörpers (18) mündet und
h) ein den Aussendeckel (1) und den Kern (3) durchsetzender Fluidluftkanal (12).

2. Dichtsystem nach Anspruch 1, dadurch gekennzeichnet, dass es mit einem Kühlsystem versehen ist.

3. Dichtsystem nach Anspruch 1, dadurch gekennzeichnet, daß der Aussendeckel (1), der Dichtring (2), der Kern (3), das Gliederband (4) und der Innendeckel (9) aus Metall bestehen.
